# EUROPÄISCHE PATENTSCHRIFT

(11) **EP 3 624 029 B1**
(45) Veröffentlichungstag und Bekanntmachung des Hinweises auf die Patenterteilung: **26.04.2023**
(21) Anmeldenummer: 19195623.4
(22) Anmeldetag: 05.09.2019
(51) Int. Cl.: G06Q 10/08, G06Q 50/02

(54) **DIGITAL GEFÜHRTER ENTLADEVORGANG EINES TRANSPORTFAHRZEUGS**
DIGITALLY MANAGED UNLOADING PROCESS OF OF A TRANSPORT VEHICLE
PROCÉDÉ DE DÉCHARGE GUIDÉ NUMÉRIQUEMENT D'UN VÉHICULE DE TRANSPORT

(30) Priorität: 10.09.2018 DE 202018105168 U; 14.09.2018 DE 202018105275 U
(43) Veröffentlichungstag der Anmeldung: 18.03.2020
(73) Patentinhaber: Feldbinder Spezialfahrzeugwerke GmbH, 21423 Winsen/Luhe (DE)
(72) Erfinder: WOLF-DIETRICH, Kley, 21423 Winsen (Luhe) (DE)
(74) Vertreter: RGTH

(56) Entgegenhaltungen:
- WO-A1-2017/095865
- WO-A1-2018/068048
- DE-A1-102015 225 163
- US-A1- 2016 171 568
- US-A1- 2016 214 551
- US-A1- 2016 239 799
- US-A1- 2017 259 722
- US-A1- 2018 052 462
- US-A1- 2018 247 262
- US-B1- 9 145 661

## Beschreibung

Die Erfindung betrifft ein Verfahren zum Steuern eines Entladevorgangs eines Transportfahrzeugs, eine Steuervorrichtung sowie ein Transportfahrzeug mit zumindest einem Behälter.

### Stand der Technik

Zum Transportieren von, beispielsweise rieselfähigem, Schüttgut werden üblicherweise Silofahrzeuge eingesetzt. Derartige Transportfahrzeuge weisen einen Behälter zum Aufnehmen des Schüttguts auf, welches über eine Einfüllöffnung in den Behälter eingebracht wird. An einer dem Untergrund des Silofahrzeugs zugewandten Seite geht der Behälter üblicherweise in einen Auslaufstutzen über.

Bei der Entladung selbst sind viele Faktoren, wie beispielsweise Art des Schüttguts, Behälterdruck, mögliche Fehler oder Blockaden während des Entladens des Schüttguts sowie Aspekte der Arbeitssicherheit zu beachten.

Bei bisherigen Lösungen erfolgte die Anbindung der elektrischen Einrichtungen analog und die Bedienung der Armaturen für die Ausbringung des Schüttgutes überwiegend mechanisch. Durch stetig wachsende Anforderungen an Transportfahrzeuge durch neue Vorschriften, Auflagen oder Sicherheitsaspekte wird die Verkabelung der Transportfahrzeuge zunehmend komplexer, wodurch sich längere Montage- und Reparaturzeiten sowie eine höhere Fehleranfälligkeit ergeben. Darüber hinaus wird die Bedienung der Transportfahrzeuge, insbesondere die Steuerung des Entladevorgangs, stetig komplizierter, sodass eine aufwendige und zeitintensive Schulung der Benutzer bzw. der Fahrer erforderlich ist.

Die US 2017/259722 A1 beschreibt ein Verfahren zum Überwachen eines Entladevorgangs durch ein Sensorsystem. Dabei wird ein Entladevorgang von Paketen durch Arbeiter anhand des Sensorsystems überwacht. Es ist eine Vielzahl von Sensoren an einer Transportbox oder einem Container angeordnet, um den Ladungszustand zu ermitteln und den Entladevorgang des separat abgepackten Ladeguts zu verfolgen.

In der WO 2018/068048 A1 ist ein Überwachungssystem mit einer Sensor-Architektur, die in einen LKW-Anhänger integriert ist, offenbart. Das Überwachungssystem kann über eine Mobilfunkverbindung datenleitend mit externen Vorrichtungen gekoppelt werden und Daten des Überwachungssystems an eine Cloud übertragen.

Die US 2016/171568 A1 beschreibt einen intelligenten Container mit einem zeitbasierten Abrechnungssystem. Basierend auf der Verweilzeit des Ladeguts im Container wird durch das Abrechnungssystem eine Gebühr berechnet.

### Offenbarung der Erfindung

Der Erfindung liegt die Aufgabe zugrunde, ein Verfahren und eine Steuervorrichtung vorzuschlagen, die einen an Eigenschaften des Füllguts angepassten bzw. optimierten Entladevorgang ermöglichen und Daten des Entladevorgangs zwecks Auswertung und Qualitätsmanagement zur Verfügung stellen.

Diese Aufgabe wird durch die im Anspruch 1, Anspruch 9 und 12 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum Steuern eines Entladevorgangs eines als Silofahrzeug für staubförmige und rieselförmige Füllgüter ausgeführten Transportfahrzeugs bereitgestellt. In einem Schritt wird ein Benutzer durch eine digital gelenkte Menüführung einer Anzeigeeinheit zum Ausführen von Arbeitsschritten des Entladevorgangs angewiesen. Von mindestens einem Sensor ermittelte Messdaten werden durch eine Steuervorrichtung ausgewertet und in Form von Abfragen und/oder Handlungsanweisungen durch die Anzeigeeinheit an den Benutzer geleitet. Die Abfragen und/oder Handlungsanweisungen werden durch den Benutzer in Form von Eingaben auf der Anzeigeeinheit quittiert, um zu einem weiteren Arbeitsschritt des Entladevorgangs zu gelangen. Die Handlungsanweisungen werden von dem Benutzer und/oder durch mit der Steuervorrichtung verbundene Aktuatoren ausgeführt. Durch die Abfragen und/oder Handlungsanweisungen und das Quittieren wird der Benutzer durch den vollständigen Entladevorgang des Transportfahrzeugs geführt. Basierend auf den durch den mindestens einen Sensor ermittelten Messdaten werden durch die Steuervorrichtung Parameter für den Entladevorgang für staubförmige und rieselförmige Füllgüter ermittelt werden, um den Entladevorgang auf Eigenschaften eines Füllgutes zu optimieren. Erfindungsgemäß werden Daten zum Entladevorgang und/oder eine Position des Transportfahrzeugs von der Steuervorrichtung gespeichert, wobei die Daten in einer Datenbank bereitgestellt und/oder an einen Kunden übermittelt werden.

Durch die Funktionen des Geologging und durch die Möglichkeit der Überwachung von beispielsweise Einfüllöffnungen kann ein Qualitätsmanagement eines Kunden durch Bereitstellung von entsprechenden Daten unterstützt werden. Die Daten können beispielsweise durch elektronische Nachrichten, wie E-Mail, bereitgestellt werden. Die Daten können beispielsweise in Form eines Betriebsdaten-Loggings ausgeführt sein. Die protokolierten Daten könne beispielsweise Druck, Temperaturen (Außentemperatur; Temperatur der Betriebsluft des Kompressors, Temperatur des Füllgutes), Füllstand, Durchfluss, Füllmasse, Verschlussüberwachung, Anschlussüberwachung und dergleichen aufweisen. Zusätzlich können Positionsdaten des Transportfahrzeugs gespeichert werden. Die Daten können auch in einer externen Kundendatenbank hinterlegt werden.

Des Weiteren werden die Daten zum Entladeort in der Steuervorrichtung hinterlegt sind oder von der Steuervorrichtung von einem externen Speicher bezogen. Der Entladevorgang kann somit besonders flexibel ausgestaltet sein. Derartige Daten können spezifische Informationen zum Entladeort aufweisen.

Durch das Einbringen einer intelligenten und intuitiv bedienbaren Menüführung einer Anzeigeeinheit zum Ausführen von Arbeitsschritten des Entladevorgangs kann die Prozesssteuerung des Entladungsvorgangs für den Benutzer bzw. den Fahrer stark vereinfacht werden. Zudem wird sichergestellt, dass alle relevanten Arbeitsschritte durchgeführt werden und keiner der Arbeitsschritte durch den Fahrer bewusst oder unbewusst ausgelassen wird.

Alternativ ist neben dem Entladevorgang auch oder anstelle dessen der Beladevorgang durch das erfindungsgemäße Verfahren ebenfalls steuerbar. Durch die Vereinfachung der Bedienung des Transportfahrzeugs durch das vorgeschlagene intuitive Verfahren, insbesondere die Bedienung während des komplexen Entladevorgangs, können deutlich mehr Fahrer das Transportfahrzeug bedienen, ohne zuvor aufwendig geschult werden zu müssen. Dabei werden durch eine Fahrzeugsensorik des Transportfahrzeugs relevante Messungen durchgeführt und die Daten in der Steuervorrichtung gesammelt und ausgewertet.

Bei den Messungen der Fahrzeugsensorik handelte es sich beispielsweise um Messungen von Behälterdrücken, verschiedene Temperaturen wie Außentemperatur oder die Temperatur der Betriebsluft eines oder mehrerer fahrzeuginterner Kompressoren. Zudem kann beispielweise die Temperatur des Füllgutes, der Füllstand einer oder mehrerer Kammern des Behälters des Transportfahrzeugs, sowie der Durchfluss, die Füllmasse, die Verschlussüberwachung und die Anschlussüberwachung gemessen werden. Die Messdaten werden anschließend an die Steuervorrichtung weitergeleitet und von der Steuervorrichtung analysiert. Die ermittelten Daten können von der Steuervorrichtung genutzt werden, um basierend auf den Messdaten den Fahrer durch gezielte Abfragen und/oder Handlungsanweisungen durch die komplizierte Abfolge von Arbeitsschritten zu leiten, ohne dass der Fahrer intensiver Kennnisse aller technischen Abläufe des Transportfahrzeugs bedarf.

Durch eine möglichst intuitive und digital gelenkte Menüführung sollen neben dem Vereinfachen der Bedienung auch Aspekte der Arbeitssicherheit, Betriebssicherheit und Unfallgefahr abgedeckt werden. Dies kann beispielsweise durch Sicherheitsabfragen ermöglicht werden, wobei die Sicherheitsabfragen zunächst durch den Benutzer quittiert werden müssen, um die Entladung oder den nächsten Schritt der Entladung zu starten. Des Weiteren soll dem Benutzer durch das Verfahren ermöglicht werden, dass die Parameter nicht manuell eingestellt werden müssen, wie beispielsweise die Einstellung eines Kugelhahns, sondern die Steuervorrichtung auf eine Datenbank zugreifen kann, die die Parameter am Fahrzeug, welche für die Entladung wichtig sind, bereits einstellen kann. Die Datenbank kann dabei auf einer externen Servereinheit oder in einer internen Datenbank hinterlegt werden. Eine Aktualisierung der Datenbank, sowie mögliche Neuerungen von Auflagen, Sicherheitsbestimmungen, Abfragen oder Handlungsanweisungen können beispielsweise über eine drahtlose Kommunikationsverbindung mit einer externen Servereinheit oder dem fahrzeuginternen Steuergerät vorgenommen werden.

Gemäß einer Ausführungsform weist die Steuervorrichtung die Anzeigeeinheit zum Durchführen der digital gelenkten Menüführung des Entladevorgangs auf und ist in einem Heckschrank des Transportfahrzeugs angeordnet. Die kompakte Ausgestaltung sowie das Zusammenfassen der Messanzeige in einer Anzeigeeinheit ermöglichen den Wegfall der unübersichtlichen und vielen analogen Anzeigen der Messvorrichtung. Hierdurch ergibt sich eine übersichtliche und benutzerfreundliche Bedienoberfläche. Die Anzeigeeinheit kann dabei gleichzeig auch als Eingabeeinheit zum Quittieren von Abfragen und/oder Handlungsanweisungen fungieren. Bevorzugterweise weist die Anzeigeeinheit einen Bildschirm auf. Der Bildschirm kann dabei eine zur Eingabe geeignete, berührungssensitive Oberfläche oder benachbarte Tasten bzw. Eingabefelder aufweisen.

Nach einem weiteren Ausführungsbeispiel wird ein tragbares Gerät über eine drahtlose Kommunikationsverbindung mit der Steuervorrichtung zum Ausführen von Abfragen und/oder Handlungsanweisungen und zum Eingeben von Quittierungen durch den Benutzer verbunden. Hierdurch können die Abfragen und/oder Handlungsanweisungen auf dem tragbaren Gerät und mit einem Abstand zu der Anzeigeeinheit erfolgen. Dies unterstützt insbesondere Aspekte des Gesundheitsschutzes, beispielsweise in Bezug auf Lärmquellen wie Kompressoren, welchen ein Benutzter beim Entladevorgang sonst üblicherweise ausgesetzt ist.

Zudem kann die Arbeitssicherheit erhöht werden, indem der Bediener weiter vom Fahrzeug weg stehen kann und so einen besseren Überblick über einen größeren Arbeitsbereich hat. Darüber hinaus kann das tragbare Gerät in Verbindung mit der drahtlosen Kommunikationsverbindung für eine regelmäßige Aktualisierung des Verfahrens beispielsweise in Bezug auf Arbeitssicherheit, Gesundheitsschutz, technische Daten oder neue Abfragen und/oder Handlungsanweisungen genutzt werden, sodass eine ständige Anpassung und Weiterentwicklung des Verfahrens ermöglicht wird. Eine softwarebasierte Aktualisierung und Anpassung an neue bzw. veränderte Bestimmungen kann üblicherweise flexibler und einfacher umgesetzt werden als ein Umbau oder eine Modifikation des Transportfahrzeugs.

Das tragbare Gerät kann besonders komfortabel für eine Fernsteuerung des Entladevorgangs eingesetzt werden, wenn die Steuervorrichtung und der Entladevorgang über eine auf dem tragbaren Gerät installierte App auf Distanz gesteuert werden. Das tragbare Gerät kann beispielsweise ein Smartphone, ein Tablet oder ein Notebook sein.

Der Entladevorgang kann eine hohe Sicherheitsstufe aufweisen, wenn bei der digital gelenkten Menüführung Bestimmungen zur Arbeitssicherheit berücksichtigt werden. Beispielsweise kann eine Checkliste vor Bedienungsfreigabe, beispielsweise für eine Sicherheitsventilprüfung, durch den Benutzer abgearbeitet werden, bevor der Entladevorgang initiiert wird. Hierdurch können Aspekte der Arbeitssicherheit, Betriebssicherheit und Unfallgefahr abgedeckt werden. Während der digitalisierten Führung können Sicherheitsabfragen gestellt werden, welche durch den Benutzer quittiert werden müssen, um die Entladung oder den nächsten Schritt der Entladung zu starten. Des Weiteren kann eine automatisierte Aktivierung von Beleuchtung sowie ein Anzeigen von Gefahrenzonen mittels der Rückfahrkamera des Transportfahrzeugs ermöglicht werden.

Es kann eine Fehlerdatenbank bereitgestellt werden, wenn während des Entladevorgangs Fehler und/oder Störungen durch die Steuervorrichtung registriert und in einer Datenbank hinterlegt werden. Ein derartiges Störungsmanagement kann dazu eingesetzt werden das Verfahren zu optimieren. Insbesondere kann eine Serviceebene für einen Betreiber und/oder für einen Hersteller bereitgestellt werden.

Nach einem weiteren Aspekt der Erfindung wird eine Steuervorrichtung, insbesondere zum Anleiten eines Benutzers bei einer Durchführung eines Entladevorgangs eines Transportfahrzeugs, bereitgestellt. Die Steuervorrichtung weist eine digitale Anzeigeeinheit auf und ist mit mindestens einem Sensor und mit mindestens einem Aktuator koppelbar. Die Steuervorrichtung ist dazu ausgestaltet, die Schritte des erfindungsgemäßen Verfahrens auszuführen.

Durch die Steuervorrichtung kann eine kontrollierte und intuitive Führung eines Benutzers realisiert werden, durch welche der Benutzer zum Ausführen einer Abfolge von Arbeitsschritten geleitet wird. Hierdurch können komplexe Arbeitsvorgänge, wie beispielsweise ein Entladevorgang eines Silofahrzeugs, auch ohne spezielle Fachkenntnisse sicher und zuverlässig ausgeführt werden.

Die Steuervorrichtung kann besonders effizient mit Fahrzeugkomponenten, Sensoren und Aktuatoren gekoppelt werden, wenn diese mit einem CAN-Bus des Transportfahrzeugs verbindbar ist. Hierdurch kann eine technisch einfache und bewährte datenleitende Verbindung zu einer Vielzahl an Komponenten hergestellt werden. Dies kann ohne das Verlegen von zusätzlichen elektrischen Leitungen erfolgen.

Die Anzeigeeinheit der Steuervorrichtung kann besonders flexibel und intuitiv ausgestaltet sein, wenn der Bildschirm als ein berührungssensitiver Bildschirm ausgeführt ist. Der Bildschirm kann insbesondere ein sogenanntes Touchpanel sein.

Gemäß einem weiteren Aspekt der Erfindung wird ein Transportfahrzeug bereitgestellt. Das Transportfahrzeug weist einen Behälter auf, welcher aus mindestens einer Kammer für ein flüssiges, staubförmiges oder körniges Füllgut besteht. Des Weiteren weist das Transportfahrzeug mindestens einen Sensor, mindestens einen Aktuator und eine Steuervorrichtung auf. Die Steuervorrichtung ist mit dem mindestens einen Sensor und mit dem mindestens einen Aktuator verbunden.

Das Transportfahrzeug kann insbesondere als Silofahrzeug für staubförmige und rieselförmige Füllgüter ausgeführt sein. Das Transportfahrzeug kann ein Kippsilofahrzeug oder ein selbsttragender Bodenentleerer mit einer oder mehreren Kammern sein. Durch die Steuervorrichtung können auch komplexe Transportfahrzeuge mit einer Vielzahl an Kammern intuitiv und kontrolliert entladen werden. Hierfür ist die Steuervorrichtung mit Sensoren und Aktuatoren des Transportfahrzeugs vernetzt und kann somit eine geführte und bei Bedarf teilautomatisierte Entladung des Behälters bzw. der Kammern ermöglichen.

Nachstehend werden mehrere Ausführungsbeispiele der Erfindung anhand der Zeichnungen näher erläutert. Es zeigen:
Fig. 1 eine schematische Draufsicht auf eine Steuervorrichtung gemäß einer Ausführungsform der Erfindung,
Fig. 2 eine schematische Darstellung einer Steuervorrichtung gemäß einer weiteren Ausführungsform der Erfindung,
Fig. 3 eine Seitenansicht auf ein Transportfahrzeug mit möglichen Befestigungspositionen der Steuervorrichtung, und
Fig. 4 eine schematische Seitenansicht des Transportfahrzeugs gemäß einer Ausführungsform der Erfindung.

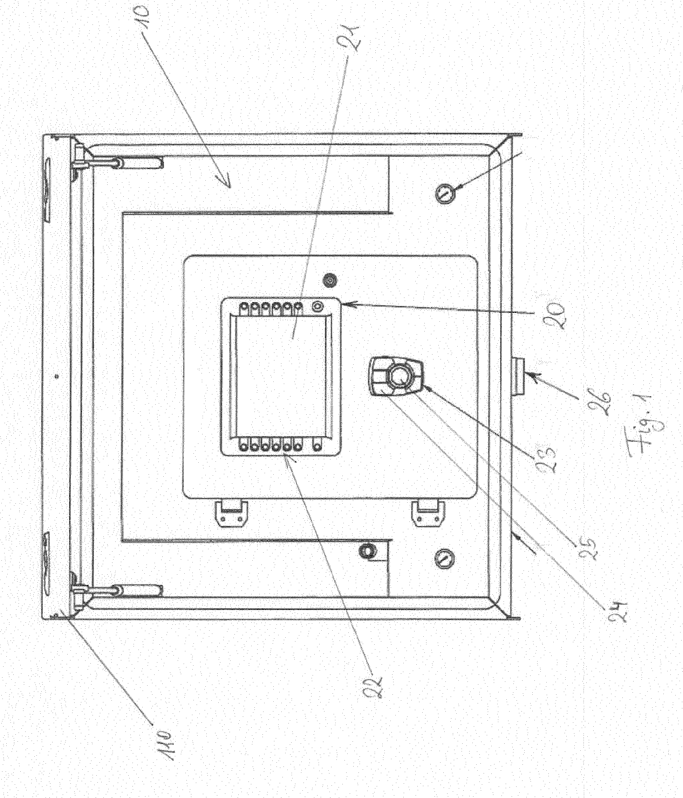

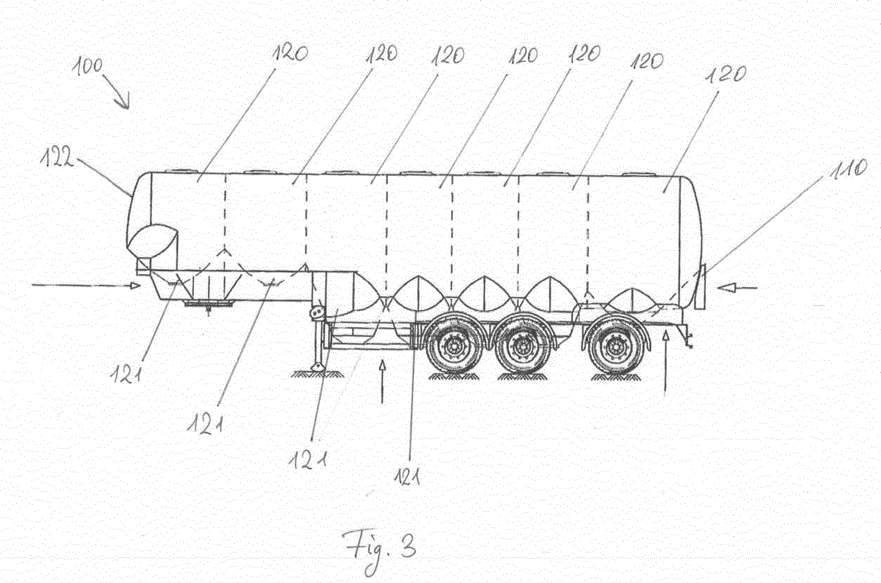

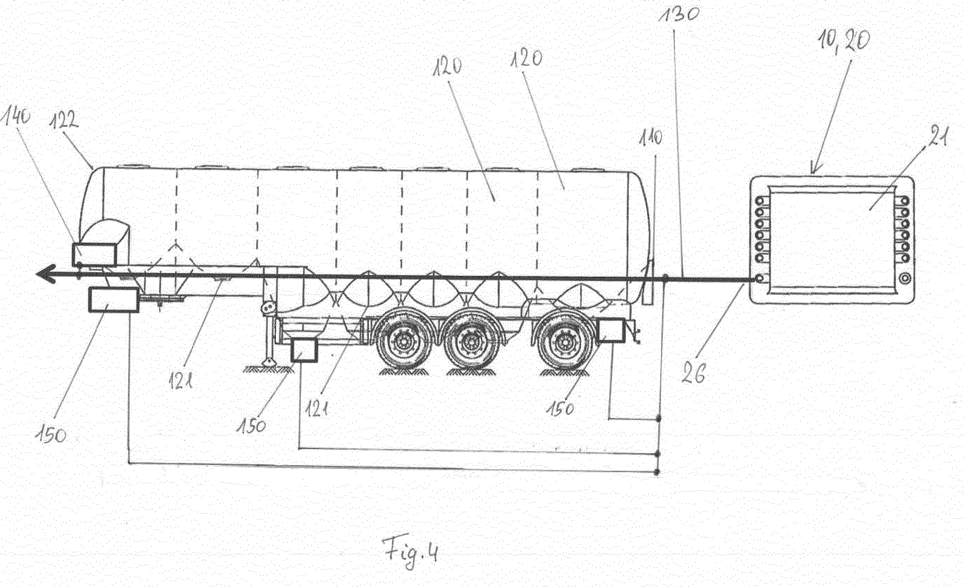

Die Fig. 1 zeigt eine schematische Draufsicht auf eine Steuervorrichtung 10 gemäß einer Ausführungsform der Erfindung. Die Steuervorrichtung 10 ist an einem in Fig. 3 und Fig. 4 dargestellten Transportfahrzeug 100 in einem Heckschrank 110 positioniert.

Die Steuervorrichtung 10 dient zum Anleiten eines (nicht dargestellten) Benutzers bei einer Durchführung eines Entladevorgangs des Transportfahrzeugs 100. Die Steuervorrichtung 10 weist eine digitale Anzeigeeinheit 20 auf, welche durch einen Bildschirm 21 Abfragen und/oder Handlungsanweisungen für den Benutzer anzeigt und den Benutzer zu Aktionen auffordert. Beispielsweise kann der Benutzer dazu aufgefordert werden, eine Ventilstellung zu prüfen, das Transportfahrzeug anzuschließen oder weitere Arbeitsschritte auszuführen, die für den Entladevorgang bzw. Entleerungsvorgang der Transportfahrzeugs 100 notwendig sind. Die Handlungsanweisungen können Text aufweisen, welcher durch grafische Elemente wie beispielsweise Piktogramme und durch bewegte Bilder unterstützt wird.

Die Anzeigeeinheit 20 der Steuervorrichtung 10 weist gemäß dem Ausführungsbeispiel ein Tastenfeld 22 auf, welches beidseitig am Rand des Bildschirms 21 angeordnet ist. Des Weiteren ist eine zusätzliche Steuerung 23 vorgesehen, welche weitere Tasten 24 und einen Drehregler 25 aufweist. Über das Tastenfeld 22 und die Steuerung 23 kann der Benutzer die Abfragen bestätigen und Handlungsanweisungen folgen. Darüber hinaus können Einstellungen der Steuervorrichtung 10 angepasst und initiale Parameter, wie beispielsweise Material eines zu entladenden Füllgutes, eingegeben werden. Alternativ oder zusätzlich kann eine sprachbasierte Eingabe durch den Benutzer von der Steuervorrichtung 10 ermöglicht werden. Die Abfragen und Anweisungen können hierbei von der Steuervorrichtung 10 auch durch akustische oder gesprochene Ausgaben erfolgen.

Zum Ausführen von Steuerbefehlen, zum Ansteuern von Aktuatoren und zum Auslesen von Sensoren weist die Steuervorrichtung 10 eine elektronische Schnittstelle 26 auf. Über die Schnittstelle 26 kann die Steuervorrichtung 10 mit Strom versorgt werden.

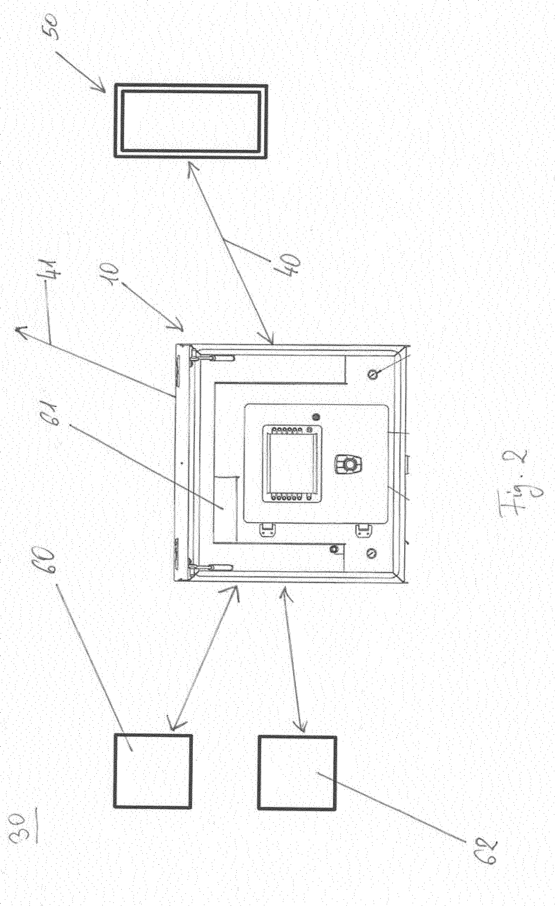

Die Fig. 2 zeigt eine schematische Darstellung einer Steuervorrichtung 10 gemäß einer weiteren Ausführungsform der Erfindung. Insbesondere ist eine Anordnung 30 mit einer Steuervorrichtung 10 dargestellt.

Die Steuervorrichtung 10 kann über eine drahtlose Kommunikationsverbindung 40 mit einem tragbaren Gerät 50 gekoppelt werden. Die Kommunikationsverbindung 40 kann hierbei eine WLAN-Verbindung, eine Bluetooth-Verbindung, eine Mobilfunkverbindung, wie beispielsweise GSM, UMTS oder LTE, und dergleichen sein.

Das tragbare Gerät 50 kann beispielsweise als ein Smartphone, ein Tablet oder ein Notebook ausgeführt sein. Über ein Programm oder eine App kann der Benutzer eine gesicherte Kommunikationsverbindung 40 zwischen dem tragbaren Gerät 50 und der Steuervorrichtung 10 herstellen. Hierdurch kann die digital gelenkte Menüführung über eine externe Anzeigeeinheit bzw. das tragbare Gerät 50 erfolgen, sodass der Benutzer eine Distanz zum Transportfahrzeug 100 wahren kann. Dies kann zur Steigerung der Sicherheit beitragen.

Während eines Entladevorgangs können Daten über eine Position des Transportfahrzeugs 100 und über den Entladevorgang von der Steuervorrichtung 10 ermittelt und in einer Datenbank 60 abgespeichert werden. Die Datenbank 60 kann eine externe oder eine vorrichtungsinterne Datenbank 60 sein.

Die in der Datenbank 60 hinterlegten Daten können einem Kunden bereitgestellt oder direkt übermittelt werden. Hierdurch kann ebenfalls eine drahtlose Kommunikationsverbindung 41 eingesetzt werden, welche der drahtlosen Kommunikationsverbindung 40 zum Koppeln eines tragbaren Geräts 50 entsprechen kann.

An einem Entladeort kann die Steuervorrichtung 10 Daten über den Entladeort von einer internen Datenbank 61 oder von einer externen Kundendatenbank 62 beziehen.

Während des Entladevorgangs können Fehler oder Störungen entstehen. Diese Fehler und Störungen werden durch die Steuervorrichtung 10 registriert und in der internen Datenbank 61 hinterlegt. Alternativ oder zusätzlich können derartige Fehlermeldungen auch über die Kommunikationsverbindung 41 an einen Betreiber versendet werden.

In der Fig. 3 ist eine Seitenansicht auf ein Transportfahrzeug 100 mit möglichen Befestigungspositionen der Steuervorrichtung 10 durch Pfeile dargestellt. Neben einer Anordnung im Heckschrank 110 des Transportfahrzeugs 100 kann die gesamte Steuervorrichtung 10 oder nur die Anzeigeeinheit 20 an einer Fahrzeugseite oder einer Fahrzeugfront befestigt werden.

Gemäß dem Ausführungsbeispiel ist das Transportfahrzeug 100 ein nichtangetriebenes Transportfahrzeug 100, welches als ein Sattelauflieger ausgeführt ist. Das Transportfahrzeug 100 weist sieben unterschiedlich große Kammern 120 zum Aufnehmen von Füllgut auf. Jede Kammer 120 kann über einen bodenseitigen Auslass 121 entleert werden. Zum Durchführen des Entladevorgangs muss der entsprechende Auslass 121 angeschlossen und mit Druckluft beaufschlagt werden, um ein Blockieren durch das Füllgut zu verhindern. Die Kammern 120 bilden einen Behälter 122 des Transportfahrzeugs 100 aus.

Die Fig. 4 veranschaulicht in einer schematischen Seitenansicht das in Fig. 3 dargestellte Transportfahrzeug 100. Gemäß dem Ausführungsbeispiel ist die Anzeigeeinheit 20 der Steuervorrichtung 10 als ein Touchscreen ausgeführt, wodurch Eingaben des Benutzers unmittelbar am Bildschirm erfolgen können. Die Anzeigeeinheit 20 ist am Heckschrank 110 des Transportfahrzeugs 100 befestigt.

Über die elektronische Schnittstelle 26 ist ein CAN-Bus 130 des Transportfahrzeugs 100 mit der Steuervorrichtung 10 verbunden. Mit dem CAN-Bus 130 ist beispielhaft ein Sensor 140 verbunden, welcher von der Steuervorrichtung 10 ausgelesen werden kann.

Des Weiteren sind an den Auslässen 121 der Kammern 120 beispielhaft Aktuatoren 150 zum Einstellen einer Druckluftmenge für die Entladung der Kammern 120 angeordnet. Die Aktuatoren 150 sind mit der Steuervorrichtung 10 derart über den CAN-Bus 130 gekoppelt, dass die Steuervorrichtung 10 basierend auf eingestellten Parametern die Aktuatoren 150 einstellen und die Druckluftmenge regeln kann.

Gemäß dem Ausführungsbeispiel ist das Transportfahrzeug 100 als ein Auflieger ausgeführt. In einer alternativen Ausgestaltung kann das Transportfahrzeug 100 auch in Form eines angetriebenen Fahrzeugs ausgestaltet sein.

### Bezugszeichenliste

- 100: Transportfahrzeug
- 110: Heckschrank
- 120: Kammer des Behälters
- 121: Auslass einer Kammer
- 122: Behälter
- 130: CAN-Bus
- 140: Sensor
- 150: Aktuator

- 10: Steuervorrichtung
- 20: Anzeigeeinheit
- 21: Bildschirm
- 22: Tastenfeld
- 23: Steuerung
- 24: Tasten der Steuerung
- 25: Drehregler der Steuerung
- 26: elektronische Schnittstelle

- 30: Anordnung
- 40: drahtlose Kommunikationsverbindung zum Koppeln eines tragbaren Geräts
- 41: drahtlose Kommunikationsverbindung für Übermittlung von Daten an Kunden
- 50: tragbares Gerät
- 60: Datenbank für Daten des Entladevorgangs
- 61: interne Datenbank der Steuervorrichtung
- 62: externe Kundendatenbank

## Patentansprüche

1. Verfahren zum Steuern eines Entladevorgangs eines als Silofahrzeug für staubförmige und rieselförmige Füllgüter ausgeführten Transportfahrzeugs (100), wobei
- ein Benutzer durch eine digital gelenkte Menüführung einer Anzeigeeinheit (20) zum Ausführen von Arbeitsschritten des Entladevorgangs angewiesen wird,
- von mindestens einem Sensor (140) ermittelte Messdaten durch eine Steuervorrichtung (10) ausgewertet und in Form von Abfragen und/oder Handlungsanweisungen durch die Anzeigeeinheit (20) an den Benutzer geleitet werden,
- die vom Benutzer quittierte Abfragen und/oder Handlungsanweisungen in Form von Eingaben auf der Anzeigeeinheit (20) empfangen werden, um zu einem weiteren Arbeitsschritt des Entladevorgangs zu gelangen,
- Handlungsanweisungen von dem Benutzer und/oder durch mit der Steuervorrichtung (10) verbundene Aktuatoren (150) ausgeführt werden,
- durch die Abfragen und/oder Handlungsanweisungen und das Quittieren der Benutzer durch den vollständigen Entladevorgang des Transportfahrzeugs (100) geführt wird, wobei basierend auf den durch den mindestens einen Sensor (140) ermittelten Messdaten durch die Steuervorrichtung (10) Parameter für den Entladevorgang für staubförmige und rieselförmige Füllgüter ermittelt werden, um den Entladevorgang auf Eigenschaften eines Füllgutes zu optimieren.

2. Verfahren nach Anspruch 1, wobei die Steuervorrichtung (10) die Anzeigeeinheit (20) zum Durchführen der digital gelenkten Menüführung des Entladevorgangs aufweist und in einem Heckschrank (110) des Transportfahrzeugs (100) angeordnet ist.

3. Verfahren nach Anspruch 1 oder 2, wobei ein tragbares Gerät (50) über eine drahtlose Kommunikationsverbindung (40) mit der Steuervorrichtung (10) zum Ausführen von Abfragen und/oder Handlungsanweisungen und zum Eingeben von Quittierungen durch den Benutzer verbunden wird.

4. Verfahren nach Anspruch 3, wobei die Steuervorrichtung (10) und der Entladevorgang über eine auf dem tragbaren Gerät (50) installierte App auf Distanz gesteuert werden.

5. Verfahren nach einem der Ansprüche 1 bis 4, wobei bei der digital gelenkten Menüführung Bestimmungen zur Arbeitssicherheit berücksichtigt werden.

6. Verfahren nach einem der Ansprüche 1 bis 5, wobei Daten zum Entladevorgang und/oder eine Position des Transportfahrzeugs (100) von der Steuervorrichtung (10) gespeichert werden, wobei die Daten in einer Datenbank (60) bereitgestellt und/oder an einen Kunden übermittelt werden.

7. Verfahren nach einem der Ansprüche 1 bis 6, wobei Daten zum Entladeort in der Steuervorrichtung (10) hinterlegt sind oder von der Steuervorrichtung (10) von einem externen Speicher (62) bezogen werden.

8. Verfahren nach einem der Ansprüche 1 bis 7, wobei während des Entladevorgangs Fehler und/oder Störungen durch die Steuervorrichtung (10) registriert und in einer Datenbank (60, 61) hinterlegt werden.

9. Steuervorrichtung (10), insbesondere zum Anleiten eines Benutzers bei einer Durchführung eines Entladevorgangs eines Transportfahrzeugs (100), wobei die Steuervorrichtung (10) eine digitale Anzeigeeinheit (20) aufweist und mit mindestens einem Sensor (140) und mit mindestens einem Aktuator (150) koppelbar ist, wobei die Steuervorrichtung (10) dazu ausgestaltet ist, die Schritte des Verfahrens gemäß einem der vorhergehenden Ansprüche auszuführen.

10. Steuervorrichtung nach Anspruch 9, wobei die Steuervorrichtung (10) mit einem CAN-Bus (130) des Transportfahrzeugs (100) verbindbar ist.

11. Steuervorrichtung nach Anspruch 9 oder 10, wobei die digitale Anzeigeeinheit (20) einen Bildschirm (21) aufweist, welcher als ein berührungssensitiver Bildschirm ausgeführt ist.

12. Transportfahrzeug (100), aufweisend einen Behälter (122), welcher aus mindestens einer Kammer (120) für ein flüssiges, staubförmiges oder körniges Füllgut besteht, aufweisend mindestens einen Sensor (140) und mindestens einen Aktuator (150) und aufweisend eine Steuervorrichtung (10) nach einem der Ansprüche 9 bis 11, welche mit dem mindestens einen Sensor (140) und mindestens einem Aktuator (150) verbunden ist.

## Claims

1. Method for controlling an unloading process of a transport vehicle (100) configured as a silo vehicle for powdery and free-flowing filling materials, wherein
- a user is instructed by a digitally guided menu navigation of a display unit (20) to carry out work steps of the unloading process,
- measurement data determined by at least one sensor (140) are evaluated by a control device (10) and transmitted to the user in the form of queries and/or instructions for action via the display unit (20),
- the queries and/or instructions for action acknowledged by the user are received in the form of inputs on the display unit (20) in order to proceed to a further work step of the unloading process,
- instructions for action are executed by the user and/or by actuators (150) connected to the control device (10),
- the user is guided through the complete unloading process of the transport vehicle (100) by the queries and/or instructions for action and the acknowledgement, wherein parameters for the unloading process for powdery and free-flowing filling materials are determined by the control device (10) based on the measurement data determined by the at least one sensor (140), in order to optimize the unloading process for properties of a filling material.

2. Method according to claim 1, wherein the control device (10) comprises the display unit (20) for performing the digitally guided menu navigation of the unloading process and is arranged in a rear cabinet {110) of the transport vehicle (100).

3. Method according to claim 1 or 2, wherein a portable device (50) is connected to the control device (10) via a wireless communication link (40) for executing queries and/or instructions for action and for entering acknowledgements by the user.

4. Method according to claim 3, wherein the control device (10) and the unloading process are remotely controlled via an app installed on the portable device (50).

5. Method according to any one of claims 1 to 4, wherein provisions for occupational safety are taken into account in the digitally guided menu navigation.

6. Method according to any one of claims 1 to 5, wherein data regarding the unloading process and/or a position of the transport vehicle (100) is stored by the control device (10), wherein the data is provided in a database (60) and/or transmitted to a customer.

7. Method according to any one of claims 1 to 6, wherein data regarding the unloading location is stored in the control device (10) or is obtained by the control device (10) from an external memory (62).

8. Method according to any one of claims 1 to 7, wherein during the unloading process errors and/or malfunctions are registered by the control device (10) and stored in a database (60, 61).

9. Control device (10), in particular for guiding a user during an execution of an unloading process of a transport vehicle (100), wherein the control device (10) comprises a digital display unit (20) and can be coupled to at least one sensor (140) and to at least one actuator (150), wherein the control device (10) is configured to execute the steps of the method according to one of the preceding claims.

10. Control device according to claim 9, wherein the control device (10) is connectable to a CAN bus (130) of the transport vehicle (100).

11. Control device according to claim 9 or 10, wherein the digital display unit (20) comprises a screen (21), which is configured as a touch-sensitive screen.

12. Transport vehicle (100), having a container (122) which consists of at least one chamber (120) for a liquid, powdery or granular filling material, having at least one sensor (140) and at least one actuator (150), and having a control device (10) according to any one of claims 9 to 11, which is connected to the at least one sensor (140) and at least one actuator (150).

## Revendications

1. Procédé destiné à commander une opération de déchargement d'un véhicule de transport (100) réalisé sous la forme d'un véhicule-silo pour des matériaux de remplissage pulvérulents et granulés, sachant que
- un opérateur est avisé par une gestion de menus à conduite numérique d'une unité d'affichage (20) pour l'exécution des étapes de travail de l'opération de déchargement,
- les données de mesure établies par au moins un capteur (140) sont exploitées par un dispositif de commande (10) et sont adressées sous la forme d'interrogations et/ou d'instructions de manutention à l'opérateur par l'unité d'affichage (20),
- les interrogations et/ou instructions de manutention validées par l'opérateur sont reçues sous la forme d'entrées sur l'unité d'affichage (20) pour parvenir à une autre étape de travail de l'opération de déchargement,
- les instructions de manutention sont exécutées par l'opérateur et/ou par des actionneurs (150) reliés au dispositif de commande (10),
- l'opérateur est guidé pendant l'opération de déchargement complète du véhicule de transport (100) par les interrogations et/ou instructions de manutention et la validation, sachant qu'en se basant sur les données de mesure établies par l'au moins un capteur (140), des paramètres sont déterminés par le dispositif de mesure (10) pour l'opération de déchargement de matériaux de remplissage pulvérulents et granulés afin d'optimiser l'opération de déchargement eu égard aux propriétés d'un matériau de remplissage.

2. Procédé selon la revendication 1, sachant que le dispositif de commande (10) comporte l'unité d'affichage (20) pour exécuter la gestion de menus à conduite numérique de l'opération de déchargement et est disposé dans une armoire arrière (110) du véhicule de transport (100).

3. Procédé selon la revendication 1 ou 2, sachant qu'un appareil portable (50) est relié par une liaison de télécommunication sans fil (40) au dispositif de commande (10) pour exécuter des interrogations et/ou des instructions de manutention et pour introduire des validations par l'opérateur.

4. Procédé selon la revendication 3, sachant que le dispositif de commande (10) et l'opération de déchargement sont pilotés à distance par une application installée sur l'appareil portable (50).

5. Procédé selon l'une quelconque des revendications 1 à 4, sachant que les dispositions de sécurité du travail sont prises en considération lors de la gestion de menus à conduite numérique.

6. Procédé selon l'une quelconque des revendications 1 à 5, sachant que des données pour l'opération de déchargement et/ou une position du véhicule de transport (100) sont mémorisées par le dispositif de commande (10), sachant que les données sont préparées dans une banque de données (60) et/ou sont transmises à un client.

7. Procédé selon l'une quelconque des revendications 1 à 6, sachant que des données pour le lieu de déchargement sont mémorisées dans le dispositif de commande (10) ou sont récupérées par le dispositif de commande (10) depuis une mémoire externe (62).

8. Procédé selon l'une quelconque des revendications 1 à 7, sachant que pendant l'opération de déchargement des erreurs et/ou anomalies sont enregistrées par le dispositif de commande (10) et sont mémorisées dans une banque de données (60, 61).

9. Dispositif de commande (10), en particulier pour guider un opérateur lors d'une exécution d'une opération de déchargement d'un véhicule de transport (100), sachant que le dispositif de commande (10) comporte une unité d'affichage numérique (20) et peut être couplé à au moins un capteur (140) et à au moins un actionneur (150), sachant que le dispositif de commande (10) est constitué pour exécuter les étapes d'un procédé selon l'une quelconque des revendications précédentes.

10. Dispositif de commande selon la revendication 9, sachant que le dispositif de commande (10) peut être relié à un bus CAN (130) du véhicule de transport (100).

11. Dispositif de commande selon la revendication 9 ou 10, sachant que l'unité d'affichage numérique (20) comporte un écran (21), lequel est réalisé sous la forme d'un écran tactile.

12. Véhicule de transport (100) comportant une citerne (122), laquelle est composée d'au moins une cellule (120) pour un matériau de remplissage liquide, pulvérulent ou granuleux, comportant au moins un capteur (140) et au moins un actionneur (150) et comportant un dispositif de commande (10) selon l'une quelconque des revendications 9 à 11, lequel est relié à au moins un capteur (140) et au moins un actionneur (150).
